# EUROPEAN PATENT APPLICATION

(11) **EP 1 137 247 A2**
(43) Date of publication of application: **26.09.2001**
(21) Application number: 01200156.6
(22) Date of filing: 18.01.2001
(51) Int. Cl.: H04N 1/00

(54) **Photofinishing system and method**

(30) Priority: 28.01.2000 US 494011
(71) Applicant: EASTMAN KODAK COMPANY, Rochester, New York 14650-2201 (US)
(72) Inventor: Slater, Walter C., Rochester, New York 14650-2201 (US); Murray, Thomas Joseph, Rochester, New York 14650-2201 (US)
(74) Representative: Parent, Yves

(57) **Abstract**

A photofinishing system and method incorporates digital technology to manage workflow in a photofinishing lab or network. In the system and method of the present invention, images which are received at the lab are converted to a common digital format. This reduces the need for physical batching by permitting work to be performed at the lab in an order which is most efficient from the standpoint of an output device, and permits lab to efficiently handle workflow which may include a variety of image inputs and consumer/retailer options.

## Description

The present invention relates to a photofinishing system and method which incorporates digital technology. More specifically the invention relates to workflow management processes that can be employed in wholesale photo-labs or lab networks that incorporate digital photofinishing.

When consumers (i.e. end users) drop off their exposed film at a retailer for developing and printing (D&P) next-day service, the film is placed into an envelope with the consumer's order information (typically name/address and type of service request) noted on the envelope. The envelopes from many retailers within a geographic region are picked up and taken to a centralized wholesale photofinishing laboratory. The orders typically arrive at the lab in the late afternoon or early evening for overnight work. The completed work is picked up by various couriers in the early morning so that they reach their appropriate destinations in a timely manner.

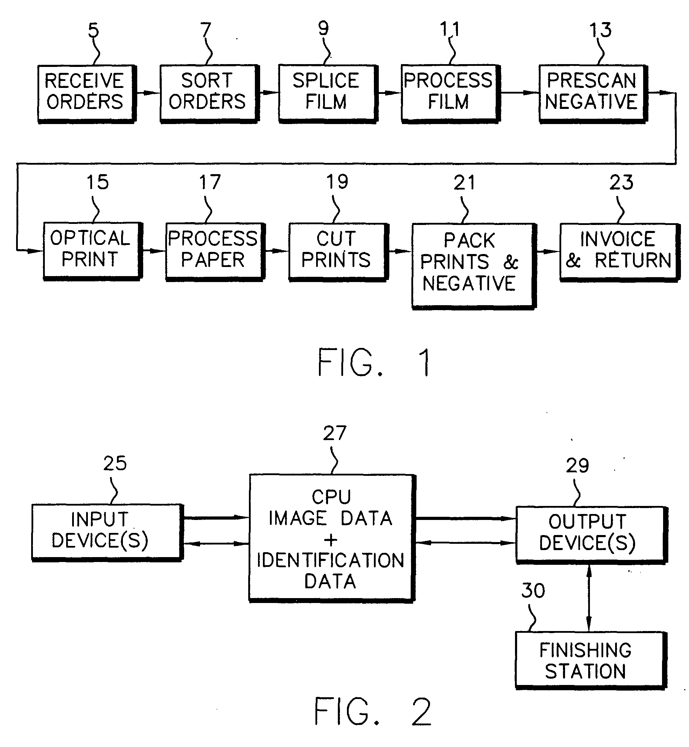

Figure 1 illustrates a typical developing and printing workflow. As the orders arrive and are received in the lab (step 5), they are sorted (step 7) according to the time of next day courier pickup. That is, orders from the more distant retailers must be worked on first in order to fulfill timely delivery back to the originating retailer. The orders from those retailers located close to the lab can be worked on last. Therefore, a "last-in, first-out" concept is generally followed.

Because consumers use different film formats (35mm, Advanced Photo System or APS, 110, etc.) and have different service requests (one print versus two prints each, 4"x6" versus 3.5"x5" print size, glossy versus matte paper surface, etc., there are many unique combinations of orders. Since most of the equipment in a lab is configured to handle a specific film or paper format, it is much more efficient to sort the orders into batches according to the common equipment needs, and then work in batches, rather than work on the orders by random arrival.

Sorting may also be required to meet specialized retailer packaging for the returned services. For example, a resulting batch formed from a particular retailer is one having the same film type and the same print size / number / print surface of output print. In this case, order envelopes are grouped together and sent to splicing. Then the film is removed from the cartridge and the individual filmstrips are spliced together end to end and placed onto a reel (step 9). The envelopes are kept in the same sequence as the spliced film reel. This reel - or batch - is then taken to a film processor where the film is processed (step 11). Following chemical processing, negative images are formed on the filmstrip. The filmstrips are then wound back onto a reel. (For 35mm, the film is notched to locate the individual images for the printer.) Each image is "pre-scanned" and analyzed based on historical information to determine the image characteristics for printing (step 13). These characteristics are passed to an optical printer (step 15) that uses the image characteristic data to adjust exposure conditions of the printer's light source when optically projected through the negative film strip onto a web of photographic paper. The paper web is chemically processed (step 17) and dried to provide a strip of viewable prints. The individual prints are then cut (step 19) from the paper web and matched up with the corresponding negatives and original envelopes to form a completed order (step 21). The process to this point maintains batch integrity and sequence. The completed individual orders from a particular retailer are sorted and invoiced for courier pickup (step 23).

Another type of order that wholesale labs receive is a print "reorder". These inputs could be negative filmstrips, prints or other media that were processed at a previous time. In most cases, the consumer/retailer wants reprints or enlargements. These orders do not require film processing and will follow a different path through the lab, but they must also be sorted for lab efficiency and output hardware compatibility.

With the advent of digital imaging, there is an expanding array of image inputs and consumer/retailer options that photofinishing labs will be required to handle. Many of the possible options are listed in Tables land 2 below which detail wholesale photofinishing lab inputs and consumer/retailer options.

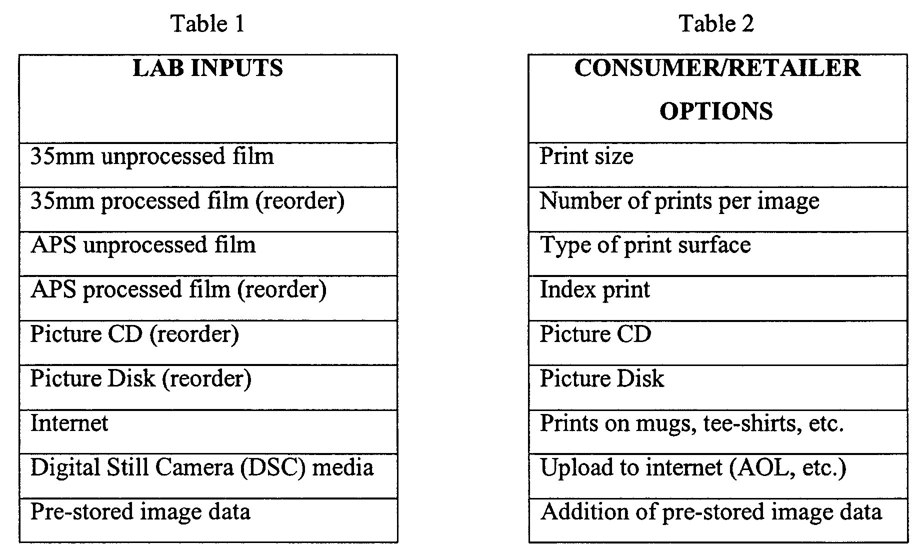

The first four options listed in Table 1 and the first three options listed in Table 2 are the traditional optical film-based images. The next five options listed in Table 1 and the next six options listed in Table 2 are digital. Picture CD (registered trademark of Eastman Kodak Company) is a relatively new image storage medium in which many wholesale labs scan photographic film and write the corresponding high resolution image data onto a 120 mm diameter optical disk. This format requires labs to install a film scanner and a CD reader/writer to provide this digital product. With digital printing equipment, these labs can then accept a previously recorded Picture CD (a digital "reorder" product) and provide prints/reprints, enlargements, pictures on coffee mugs, etc. Picture Disk (registered trademark of Eastman Kodak Company) is a lower resolution image storage format using the 3.5-inch floppy diskettes of personal computers but otherwise is similar to Picture CD in functionality. Image orders sent electronically such as via the internet or a local area network (LAN) will become a significant business to the wholesale lab. With the increasing use of digital still cameras (DSC), a demand is being created for producing prints from the image data stored on DSC media. Some labs may even offer pre-stored digital image data to be added to the consumer's/retailer's output image (last option in Tables 1 and 2). Examples of pre-stored image data are borders, calendars, backgrounds and messages (such as for holidays, birthdays, etc.).

As products and services enter the marketplace, additional hardware has to be added to handle the consumer/retailer options. These in turn may require additional sorting to take place in the traditional wholesale lab. The number of sort combinations increases exponentially with the addition of new products and services. Therefore even more physical batches need to be created and the batch size often becomes correspondingly smaller. This is further complicated by those orders requiring multiple outputs (prints and Picture CD, for example) from the same consumer/retailer order. (From a given retailer's order, there could be easily over a hundred different combinations.) Generally, every combination of input type and output type requires a distinct physical batch to be created. The work is done in batches in which the envelopes accompany the flow of work in the lab.

The different batches require "set up" activity to be performed. Some of the functions that require set up for different batches are the following:
(a) Splicer (a new leader, magazine and batch card goes with each batch);
(b) Printer (paper width, glossy versus matte paper surface and 1 versus 2 prints each require a different batch);
(c) Packaging (different packaging and inserts for retailers require a set up activity);
(d) Matching up product with the batch sheets; and
(e) Record keeping increases with the different batches

These set up activities in turn add time and cost to the photofinishing operation. That is, as more physical batches are added, more labor, cost and complexity is added to the photofinishing operations. Therefore, any reduction in the number of physical batches will improve the efficiency of wholesale photofinishing.

US patent no. 5,974,401 discloses a process in which a user communicates directly with a photo-lab to order prints. Although this approach may eliminate one trip to the retailer, it has the following drawbacks or disadvantages:
(a) the process does not provide a means to obtain digital image data from unprocessed photographic film;
(b) the customer (or his or her agent) is required to have one or more digital image input devices (film scanner or print scanner) which is likely to be of lower image quality than the equipment employed by a large-scale photo lab;
(c) the customer is required to use a personal computer and to be skilled in image processing; and
(d) the customer may not optimally account for the characteristics of the particular output device in image processing.

The above drawbacks or disadvantages may potentially lead to final prints which are inferior in quality.

Based on the foregoing, an object of the present invention is to improve the operational efficiency in managing image workflow within a photofinishing lab. Within the context of the present application, a photofinishing lab is not limited to a single plant or location having photofinishing equipment therein. A photofinishing lab could be a network or system which comprises different photofinishing centers that do not have to be located in the same physical plant. For example, the network could comprise a stand-alone kiosk, a kiosk at a retail store, a retail minilab and a photo-lab all electronically interconnected.

More specifically, an object of the present invention is to improve the operational efficiency of wholesale photofinishing labs in an increasingly digital imaging era, without requiring appreciable change of behavior on the part of the consumer or on the part of the retailer. By improving the operational efficiency of wholesale photofinishing labs, these labs will be able to provide the highest image quality product at the lowest cost.

The digital wholesale photofinishing lab and process of the present invention provides the opportunity to solve many of the physical batch and workflow problems that occur in the typical current wholesale lab that has to handle a wide variety of input/output options. This can be achieved by removing some of the constraints due to physical media characteristics and/or the sequence of output creation.

The present invention relates to a method of producing digital image products in a photofininshing lab, with the photofinishing lab having a plurality of image obtaining devices for obtaining a plurality of digital images, a plurality of digital output devices for providing a plurality of digital image products based on the obtained digital images, and a central processing unit. Each one of the obtained digital images is related to an original order. The method comprises the steps of: associating each obtained digital image with identification data; sending each of the obtained digital images and their associated identification data to the central processing unit, with the central processing unit analyzing each of the obtained digital images and comparing the analyzed obtained digital images with reference digital image data representative of an optimum image, and the central processing unit further determining an output sequence of each of the obtained digital images to the output devices based on at least the associated identification data; providing a digital image product based on the obtained digital image at the digital output device; and combining the digital image product from the output device with a related original order from the original orders using the associated identification data.

The present invention further relates to a photofinishing lab for producing digital image products. The photofinishing lab comprises a plurality of image obtaining devices for obtaining digital images, with each of the digital images being related to original orders; a plurality of image output devices for providing digital image products based on the obtained digital images, with each of the obtained digital images being associated with identification data; a central processing unit which receives the obtained digital images and the associated identification data, with the central processing unit being adapted to analyze the obtained digital images and compare each of the obtained digital images with reference image data representative of an optimum image, and the central processing unit being further adapted to determine an output sequence for each of the obtained digital images to the image output devices based on at least the associated identification data; and a finishing arrangement which is adapted to combine the digital image products from the image output devices with a related original order from the original orders using the associated identification data.

The present invention further relates to a photofinishing method for managing workflow in a photofinishing lab. The method comprises the steps of: receiving images at the photofinishing lab, with each of the images being related to original orders; associating each image with identification data; sending each image and its associated identification data to a processing unit, with the processing unit analyzing the image with reference to image data representative of an optimum image and determining an output sequence of each of the images to output devices based on at least the associated identification data; providing an image product based on the image at an output device of the output devices which is appropriate for the image product; and combining the image product from the output device with a related original order from the original orders using the associated identification data.

The present invention further relates to a computer program product which comprises: a computer readable storage medium having a computer program thereon which when loaded into a computer causes the computer to manage workflow in a photofinishing lab by performing the following steps: associating images received at the photofinishing lab with identification data, with each of the images being related to original orders; sending each image and its associated identification data to a processing unit, with the processing unit determining an output sequence of each of the images to output devices based on at least the associated identification data; providing an image product based on the image at an output device of the output devices which is appropriate for the image product; and combining the image product from the output device with a related original order from the original orders using the associated identification data.

The present invention further relates to a digital photofinishing arrangement which comprises a plurality of output devices, with each of the output devices being adapted to produce a different output image product; a plurality of image obtaining devices for obtaining images, with at least one of the image obtaining devices being adapted to convert non-digital images from the images to a digital format so as to place all of the obtained images in a common digital format; and a processing unit which is adapted to create a virtual batch of the obtained images for forwarding to the plurality of output devices. The virtual batch is created based on at least a time necessary to complete the output image products so as to compile a sequence of completion of the output image products that permits an efficient use of the output devices.

The present invention further relates to a photofinishing method which comprises the steps of: receiving images at a photofinishing lab; converting non-digital images of said received images into a digital format, such that all of the images received at the photofinishing lab are in a common digital format; and creating a virtual batch of the received images based on at least a time necessary to complete output image products at any of a plurality of output devices. The output image products are each related to an associated received image from the received images, such that a sequence of completion of the output image products permits efficient use of the output devices is compiled.

The present invention further relates to a method of managing workflow in a photofinishing lab comprising the steps of: receiving images at the photofinishing lab; determining an output service/product which will be produced in association with the received images; and creating a virtual batch of the received images based on at least the output service/product associated with the received image. The virtual batch is indicative of an order sequence for completing the output service/product for the received images.

The present invention further relates to a computer program product which comprises a computer readable storage medium having a computer program thereon which when loaded into a computer causes the computer to manage a photofinishing workflow by performing the following steps: determining an output service/product which will be produced in association with captured images; and creating a virtual batch of the images based on at least the output service/product associated with the image. The virtual batch is indicative of an order sequence for completing the output service/product for the image.

The present invention further relates to a photofinishing method comprising the steps of: receiving images at a photofinishing lab; associating the images with identification data; and creating a virtual batch of the images based on at least the identification data so as to provide for a sequence of completion of output image products associated with the images.

The present invention also relates to a photofinishing method which comprises the steps of: receiving images at a photofinishing lab in a first sequence; converting non-digital images of the received images into a digital format, such that all of the images received at the photofinishing lab are in a common digital format; and creating a virtual batch of the received images based on at least a common output product/service in a second sequence different than the first sequence.
Figure 1 illustrates a typical developing and printing sequence workflow;
Figure 2 schematically illustrates a digital photofinishing lab concept workflow sequence in accordance with the present invention;
Figure 3 schematically illustrates a digital lab and workflow process in accordance with the present invention;
Figure 4 schematically illustrates the creation of an output sequence and/or service/product;
Figure 5 schematically illustrates a sequence for producing an output service/product in a digital lab; and
Figure 6 schematically illustrates a further example with respect to sequencing an output service/product.

Referring now to the drawings, wherein like reference numerals designate identical or corresponding parts throughout the figures, Figure 2 schematically illustrates a digital photofinishing lab concept in accordance with the present invention. In Figure 2, the bold lines represent the flow of image data or digital image data while the standard width lines represent the flow of identification data.

A feature of a digital photo lab is that images are converted in the lab to a common digital format even if they do not arrive at the lab in digital form. Various image obtaining devices 25 may be employed to convert the lab input format to digital image data. For example, processed film will be input to a film scanner for conversion to digital image data. Output devices 29 will accept the digital image data (digital images) and produce the required output such as prints or other products or services. The digital image can "look the same" without regard to the original image source (that is, whether the original image source was 35mm, APS, a reorder copy print Picture CD, Picture Disk, direct electronic input or a digital camera image). In this way, an output sequence of work done at an output device is not dictated by the sequence of orders formed from physical batches. Rather, the work can be performed in an order that is most efficient from the standpoint of the output device or based on other considerations in the lab. This is referred to as "virtual batching", since the work batches are not based on the physical batches that are required of conventional photofinishing labs. It is understood that at least some operations should be completed on the physical batch or orders from which the digital image was obtained. The output sequence or virtual batch as noted above, depends upon, but is not limited to, (1) the arrival time of previously partially completed orders; (2) the available time in which to complete an order to be ready for courier pickup; (3) the availability of the output device including necessary supplies to complete the order; (4) the number of orders of each type; and (5) the output product/service that is to be produced for the associated image.

The output service/product is created in the digital lab by retrieving stored image data in a defined sequence and then creating the output. In order to keep track of the digital image data, it is necessary to associate identification data with the image data. Identification data is all data associated with the image except for the image data. This would include (but not limited to) the retailer store name or ID, consumer/retailer unique identification number, type of input (e.g., 35mm, 100 speed color negative film), the source of the obtained image, magnetic data on film and the output product (or service) requested by the consumer/retailer. The image data and identification data are then stored in a Central Processing Unit (CPU) 27 for access by the various digital output devices. CPU 27 can be a single computer, a computer network, a component of an IDM (image data manager), etc.

The following example illustrates how a digital lab having the features described in the present invention can handle orders more efficiently than a traditional lab. More specifically, the following table illustrates how a traditional lab and a digital lab would handle orders with two film types and two product/services. One of the film types is based on 35mm film and the other film type is based on APS film.

| Order | Film Type | Print Size/Output Request | Traditional Batch | Digital (Virtual) Batch |
|---|---|---|---|---|
| 1 | 35mm | 3.5 x 5 inches | A | X |
| 2 | 35mm | 4 x 6 inches | B | Y |
| 3 | 35mm | 4 x 6 inches | B | Y |
| 4 | APS | 4 x 6 inches | C | Y |
| 5 | APS | 3.5 x 5 inches | D | X |
| 6 | APS | 4 x 6 inches | C | Y |

As shown, some orders require 3.5 x 5" prints and some require 4" x 6"-prints. In the traditional lab, four physical batches (A, B, C, and D) would need to be created: one for every unique combination of film and print size. But in a digital lab having the features of the present invention, orders 1 and 5 can be placed into a sequence as a virtual batch X representing a printing job and orders 2, 3, 4 and 6 can be sequenced in a virtual batch Y representing another printing job. Thus, using the above example, it is seen that the system of the present invention permits the reduction of batches or printing jobs from 4 to 2, resulting in a more efficient workflow. Here it is the output device requirements that determine the order of work rather than the combination of both the output and input physical characteristics. The above example illustrates workflow orders in which the input is film and the output service/product is a print. When digital products such as a Picture CD are added to the orders, in a traditional lab it would be necessary to create more physical batches to properly sequence a finishing operation. In the system of the present invention, the addition of a digital product such as a Picture CD to any of the orders would not require the creation of another physical batch. Rather, information with respect to the digital product would appear in or be referred to, for example, the identification data, and stored in CPU 27, which monitors a finishing operation to assure that the digital product is created in sequence with the associated prints.

The present invention further accommodates a hybrid optical/digital workflow. For example, there are times when input film batches will be scanned and the image data stored for producing a digital product (Picture CD, Picture Disk, prints etc.). However, a lab may choose to print this batch optically instead of digitally. In these cases, an optical printer such as a CLAS 35 printer can be used and controlled in such a manner to skip those orders which are to be printed digitally.

The input devices 25 and output devices 29 communicate with CPU 27 which manages or controls the flow of image data (when and what data) to and from the input and output devices. For example, image data may go to one output device 29, such as a digital printer, as well as to a second output device 29, such as a Picture CD writer. Included in the communication from output device 29 to CPU 27 will be the status or readiness of the output device to receive data. Algorithms can be used by CPU 27 to efficiently match up image data with the appropriate output device 29.

Thus, as shown in Figure 2, input device 25 provides image and identification data to CPU 27. Identification data is provided to CPU 27 along with other data (production control data, for example) necessary to control the system. Using algorithms and at least the appropriate identification data, CPU 27 controls the flow of image data to the appropriate output devices 29. Reference numeral 30 represents a finishing station in which a digital image product from one of the output devices are combined with the original consumer/retailer order using the associated identification data.

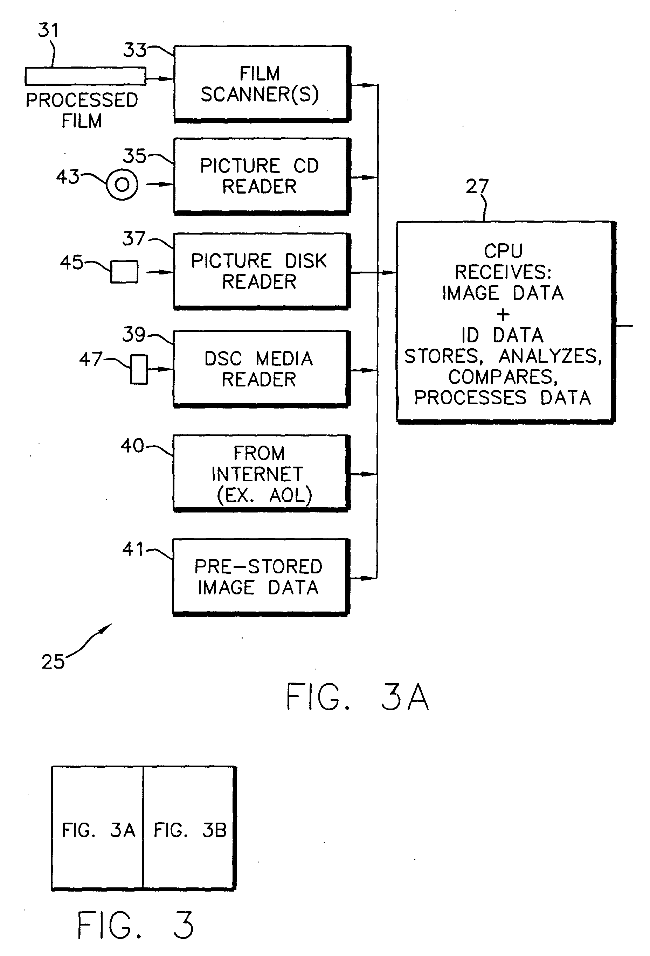

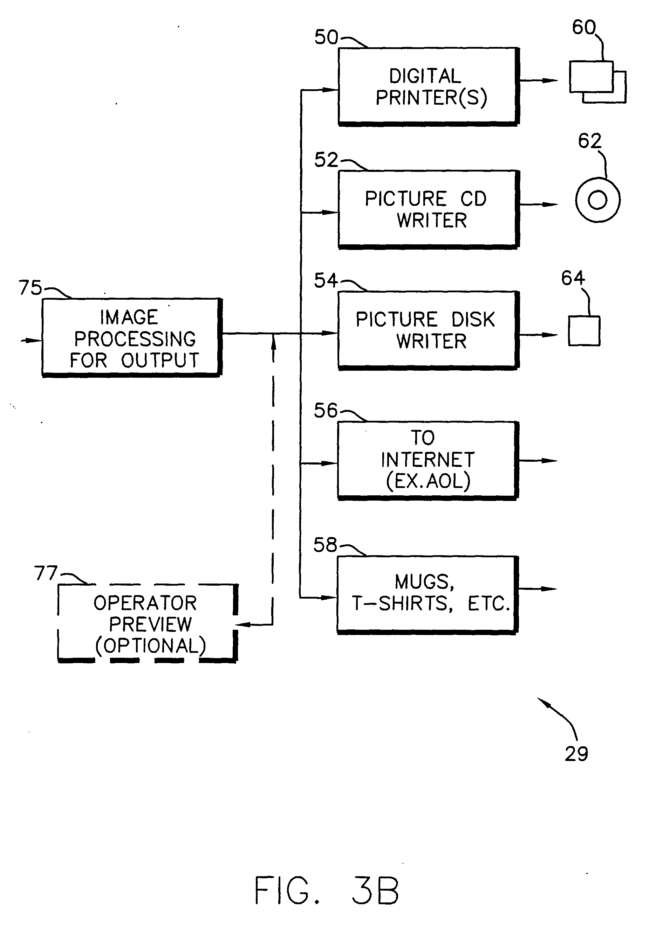

Referring now to Figure 3, this figure expands upon Figure 2 by illustrating many of the types of input and output devices which can be used in a digital wholesale photofinishing lab. Processed film 31, for example, reels of spliced processed film, would arrive from either a film processor for D&P orders or from an envelope for film reorders and would be scanned by film scanner(s) 33. For reorders, scanner 33 will accept cut negative film strips. Scanner 33 scans the film and provides digital image data and identification data, which would be sent to CPU 27 for association and/or storage. It is noted that the identification data can come from sources other than input devices 25 (scanner 33 etc.). Likewise, the other input devices (Picture CD reader 35, Picture Disk reader 37, DSC media reader 39, online (internet AOL, electronic) input 40, and prestored image data 41) provide the same type of data to CPU 27. As illustrated, Picture CD reader 35 can receive image input from a Picture CD 43, Picture Disk reader 37 can receive image input from a floppy diskette 45, and DSC media reader 39 can receive image input from a card 47 such as a PCMCIA card.

The image data as received by CPU 27 has not yet been processed for color correction, tone scale, sharpening, etc.. As is well known in the photofinishing and photography art, CPU 27 can analyze the original image data (taking into account the characteristics of the image obtaining device and the selected identification data) and compare it to a database with reference digital image data. The database with reference digital image data is formed from a combination of previous experience and may be updated by regression analysis using the current image data. The reference digital image database can include information representative of at least an optimum image. The current image data is automatically manipulated, corrected or modified without operator intervention to provide optimized image data.

Prior to a sending or retrieval of the image data to an output device (50, 52, 54, 56, 58) the image data is analyzed, processed and/or prepared (formatted) for the specific output device characteristics at CPU 27. More specifically, CPU 27 or CPU 27 in communication with an image processing unit 75 is adapted to determine a timing and/or an output sequence of each of the images to the output device based on at least the associated identification data, and routes the image data to the appropriate output device. The identification data could be source data indicative of a source of the original or obtained image or the digital image, the type of output product/service desired, a unique consumer/retailer identifier, or it can be read from magnetic data on film. In this way, the image quality is optimized for the specific characteristics of the output device. Some images may be previewed by an operator 77 (for correction or for applying additional image manipulation) prior to being committed to output.

As an example, CPU 27 can be adapted to create a virtual batch of the images for forwarding to the plurality of output devices 29. The virtual batch can be created based on at least (1) a time necessary to complete the output image products, so as to compile a sequence of completion of the output image products that permits an efficient use of the output devices 29, or (2) the output service/product associated with the image, such that the virtual batch can be indicative of at least an order sequence for completing the output service/products for the image. In view of the above, CPU 27 can be operationally associated with a timer to determine, set-up or begin the output sequence.

Further, the photofinishing workflow managing features of the invention can be achieved by way of a computer program product that includes a computer readable storage medium. The computer readable storage medium can be operationally associated with or integrated with CPU 27 to achieve photofinishing and image workflow control and management between the input and output devices and the CPU in the manner describe in the present specification.

Once the digital data is received by CPU 27, the input medium (film, CD, floppy diskette, etc.) is no longer needed in the lab for producing output (unless a hybrid optical/digital workflow is employed). In a hybrid optical/digital workflow the input medium, i.e., a filmstrip, would be needed for optical printing.

For producing prints from digital images, digital printers can be used in place of the traditional optical printers. Digital printers are well known such as those that employ thermal dye-diffusion printers, drop-on-demand or continuous inkjet printers, and various laser-type printers including those that use silver halide photographic paper as the medium.

Therefore, as shown in Figure 3, the output devices 29 can include digital printers 50 which produce digital prints, a Picture CD writer 52 which produces a Picture CD 62, and a Picture Disk writer 54 which produces a floppy disk 64. The output can also be realized via an online or electronic service 56 such as AOL, and can include specialized output devices 58 for producing mugs, T-shirts, etc. In the case of the output devices being digital, they need not be located in the proximity of the input devices; some or all could be at a remote location. Further, as described above, a printing lab may employ a variety of digital printers 50. One digital printer may be used for producing standard size prints (3.5x5-inch, 4x6-inch), one for index prints and one for enlargements. In principle, the inputs to any of the output devices (50, 52, 54, 56, 58) could have originated from any of the input sources (33, 35, 37, 39, 40, 41) shown in Figure 3.

Algorithms are developed to determine when the digital data is downloaded to a digital output device. This output sequence will depend on at least the readiness of the output device. In other words, the printer must be loaded with the appropriate amount of the right type and size of paper. The output sequence will also depend on when the consumer/retailer order must be completed. As described earlier, orders from the more distant retailer must be completed earlier than the retailers located closer to the wholesale lab.

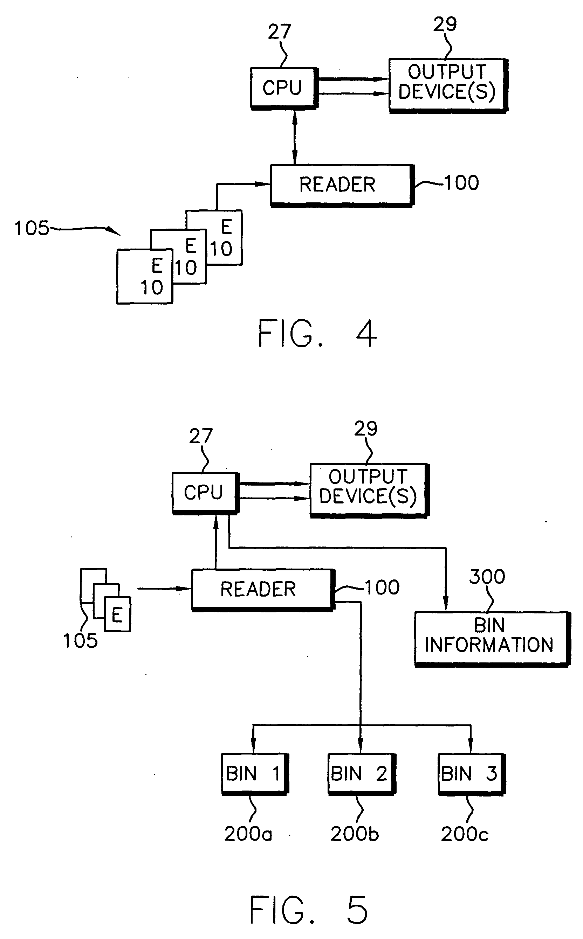

As previously described, and with reference to Fig. 4 which schematically illustrates the creation of the output sequence and/or output service/product, a virtual batch can be created based on at least the use of one or more order ID's (identification data) that are sent in sequence to CPU 27 as a result of some action within the workflow of the lab. That action may be caused by a reading station or device 100 which identifies the order ID, the envelope ID for envelopes 105 (schematically shown as an example in Fig. 4), or even a previously established physical batch ID. Once that reading device 100 sends the ID data to CPU 27, envelopes 105 or media generating the ID are kept in the same logical sequence in which the ID's were read and sent to CPU 27. That can be done either mechanically or by the actions of an operator. It is possible with this method to establish through this workflow logic at least one virtual batch but more than one may be in process at the same time from one or more reading stations. Separate queues of envelopes for each of the virtual batch types being created may be managed by a device or operator. They may even be combined in an appropriate sequence with each other based upon criteria such as priority. The destination queue for the envelope or ID source may be identified to the operator or device by CPU 27. That data would be based upon the service type being fulfilled within the virtual batch that is associated (and retained in memory) with the ID. At some point in the reading of at least the ID's, a virtual batch limit is reached, the queues are emptied and the envelopes are sent to finishing station 30 (Fig. 2) for matchup with the media from output device 29. That termination criteria could be the number of orders, the time established to meet the priority deadline or the volume of orders arriving at the reading device.

Equally possible is a computer routine that determines through a logical time algorithm, the virtual batch completion time for the number of orders for a particular service that are in process somewhere within the lab flow. That device processing that routine then signals the central processing unit to begin sending order data to the output device. Subsequent steps in the workflow then provide the ability to re-sequence the physical envelopes into the same sequence of the output.

Figure 5 schematically depicts a method of defining the sequence for producing output in a digital lab in accordance with the present invention. Reading device 100 is used to read a code such as a machine readable code or barcode on order envelope 105. The code may contain information on what output was requested by the consumer/retailer or may refer to stored information associated with the identification data. An operator can pick up an envelope and swipe the code through reading device 100. Reading device 100 will then send a communication to CPU 27. At CPU 27, it is determined which bin 200a, 200b, 200c the envelope should be placed into. This bin information or message 300 is then sent to the operator who carries out the action (for example, placing the envelopes in sequence in the bins). The bins represent different output services or products. For example, Bin 1 (200a) could represent those orders requiring Picture CD, Bin 2 (200b) could represent those orders requiring Picture Disk, and so forth. As this is being carried out on a plurality of envelopes 105, CPU 27 knows the order of the envelopes in each bin (200a-200c). This will be the same order that the appropriate output device 29 will use. In the above example, the order of the envelopes in Bin 1 (200a) will drive the sequence that image data is downloaded to the Picture CD writer and, therefore, the same order that Picture CD's are produced. When the stack of Picture CD's are delivered to Bin 1 (200a), the order will be the same as the envelopes thus making it straightforward to add the correct Picture CD to the correct envelope.

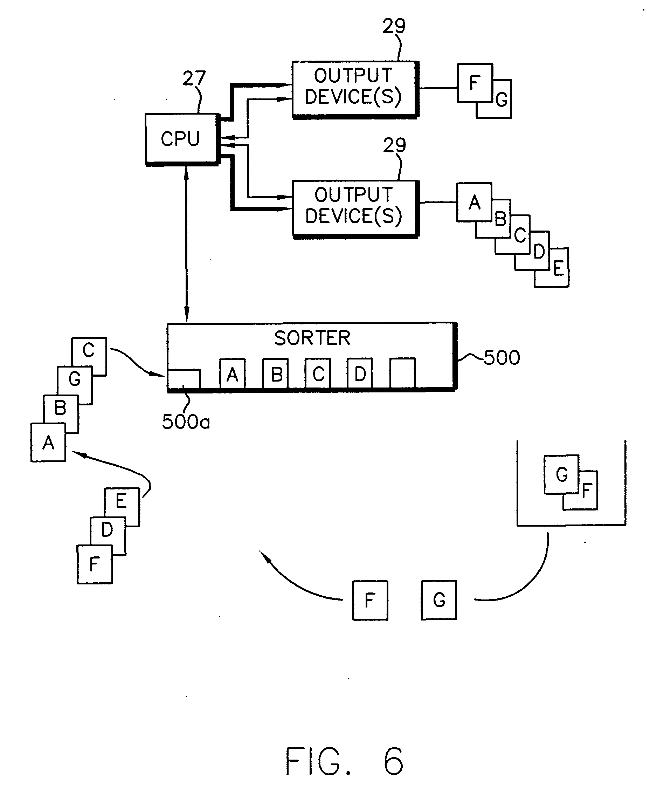

Alternatively, a second method could be employed in which the order or sequence of the envelopes is modified (i.e. from a first sequence to a second sequence different from the first sequence) in order to match up with the order of the output. Figure 6 illustrates one output device 29 with five output service/products (or envelopes) A-E of a first type and another output device 29 with two output service/products (or envelopes) F-G of a second type different than the first type. CPU 27 sends the output order sequence to an envelope sorter 500 having a reading device 500a. The reading device 500a places the corresponding envelopes A-E in the same order as received from CPU 27. The envelopes not needed for the current batch, matchup, or finishing step (i.e. F and G) are temporarily set aside from the current batch. After the current batch of envelopes are placed into the correct order, subsequent batches (i.e. F and G) are then sorted. Each batch is then sent to finishing station 30 (Fig. 2) for final packaging.

Thus, a virtual batch of images based on at least a common output product/service is created in a sequence (i.e. a second sequence) that is not the same as the sequence (i.e. a first sequence) of the original batch (order) or image source acquisition. Envelope sorter 500 is effective to re-sequence the original batch or order to the second sequence.

There are several benefits to a digital photo lab as described in the present specification. Some of these are listed as follows:
(a) Standard interfaces can be developed (open architecture) so that input and output devices (peripherals) can be developed by multiple vendors and added as needed.
(b) Input orders need not be physically batched. The digital image data can be captured in the order that it is received.
(c) All images can be previewed by the same type of display system. Images can be compared side-by-side with different image processing algorithms to determine the effect of the algorithms.
(d) Image data can be stored by the lab (if the consumer/retailer desires) after the negatives are returned to the consumer/retailer. The consumer/retailer can place a reorder or makeover by electronic request.
(e) The lab can accept digital image data directly from other labs (electronic trans shipment) or directly from consumers/retailers.
(f) Equipment and human resources in the lab can be more effectively applied.

## Claims

1. A method of producing digital image products in a photofininshing lab, the photofinishing lab having a plurality of image obtaining devices (25) for obtaining a plurality of digital images, a plurality of digital output devices (29) for providing a plurality of digital image products based on the obtained digital images, and a central processing unit (27), wherein each one of the obtained digital images is related to an original order, the method comprising the steps of:
associating each obtained digital image with identification data;
sending each of said obtained digital images and their associated identification data to the central processing unit (27), the central processing unit analyzing each of the obtained digital images and comparing said analyzed obtained digital images with reference digital image data representative of an optimum image, said central processing unit further determining an output sequence of each of said obtained digital images to said output devices based on at least the associated identification data;
providing a digital image product based on the obtained digital image at said digital output device (29); and
combining the digital image product from the output devices with a related original order from said original orders using the associated identification data.

2. A photofinishing lab for producing digital image products, the photofinishing lab comprising:
a plurality of image obtaining devices (25) for obtaining digital images, each of said digital images being related to original orders;
a plurality of image output devices (29) for providing digital image products based on said obtained digital images, each of the obtained digital images being associated with identification data;
a central processing unit (27) which receives said obtained digital images and the associated identification data, said central processing unit being adapted to analyze the obtained digital images and compare each of said obtained digital images with reference image data representative of an optimum image, said central processing unit being further adapted to determine an output sequence for each of said obtained digital images to said image output devices based on at least the associated identification data; and
a finishing arrangement (30) which is adapted to combine the digital image products from said image output devices with a related original order from said original orders using the associated identification data.

3. A photofininishing method for managing workflow in a photofinishing lab, the method comprising the steps of:
receiving images at the photofinishing lab, each of said images being related to original orders;
associating each image with identification data;
sending each image and its associated identification data to a processing unit, the processing unit analyzing said image with reference to image data representative of an optimum image and determining an output sequence of each of said images to output devices based on at least the associated identification data;
providing an image product based on the image at an output device of said output devices which is appropriate for the image product; and
combining the image product from the output device with a related original order from said original orders using the associated identification data.

4. A computer program product comprising:
a computer readable storage medium having a computer program thereon which when loaded into a computer causes the computer to manage workflow in a photofinishing lab by performing the following steps:
associating images received at the photofinishing lab with identification data, each of the images being related to original orders;
sending each image and its associated identification data to a processing unit, the processing unit and determining an output sequence of each of said images to output devices based on at least the associated identification data;
providing an image product based on the image at an output device of said output devices which is appropriate for the image product; and
combining the image product from the output device with a related original order from said original orders using the associated identification data.

5. A digital photofinishing arrangement comprising:
a plurality of output devices (29), each of said output devices being adapted to produce a different output image product;
a plurality of image obtaining devices (25) for obtaining images, at least one of said image obtaining devices being adapted to convert non-digital images of the obtained images into a digital format so as to place all of the obtained images in a common digital format; and
a processing unit (27) which is adapted to create a virtual batch of said obtained images for forwarding to said plurality of output devices, said virtual batch being created based on at least a time necessary to complete the image products, so as to compile a sequence of completion of said output image products that permits efficient use of said output devices.

6. A photofinishing method comprising the steps of:
receiving images at a photofinishing lab;
converting non-digital images of said received images into a digital format, such that all of the images received at said photofinishing lab are in a common digital format; and
creating a virtual batch of said received images based on at least a time necessary to complete output image products at any of a plurality of output devices, each of said output image products being related to an associated received image from said received images, such that a sequence of completion of the output image products that permits efficient use of the output devices is compiled.

7. A method of managing workflow in a photofinishing lab comprising the steps of:
receiving images at the photofinishing lab;
determining an output service/product which will be produced in association with said received images; and
creating a virtual batch of said received images based on at least the output service/product associated with the received image, said virtual batch being indicative of an order sequence for completing the output service/product for the received images.

8. A computer program product comprising:
a computer readable storage medium having a computer program thereon which when loaded into a computer causes the computer to manage a photofinishing workflow by performing the following steps:
determining an output service/product which will be produced in association with captured images; and
creating a virtual batch of the images based on at least the output service/product associated with the image, said virtual batch being indicative of an order sequence for completing the output service/product for the image.

9. A photofinishing method comprising the steps of:
receiving images at a photofinishing lab;
associating the images with identification data; and
creating a virtual batch of said images based on at least the identification data so as to provide for a sequence of completion of output image products associated with the images.

10. A photofinishing method comprising the steps of:
receiving images at a photofinishing lab in a first sequence;
converting non-digital images of said received images into a digital format, such that all of the images received at the photofinishing lab are in a common digital format; and
creating a virtual batch of the received images based on at least a common output product/service in a second sequence different than the first sequence.
